# EUROPEAN PATENT APPLICATION

(11) **EP 4 369 720 A1**
(43) Date of publication of application: **15.05.2024**
(21) Application number: 21949410.1
(22) Date of filing: 07.07.2021
(51) Int. Cl.: H04N 21/43, H04N 21/436, H04N 21/4363, H04N 21/485

(54) **DISPLAY DEVICE, CONTROL METHOD AND CONTROL SYSTEM THEREFOR**

(71) Applicant: LG Electronics Inc., Yeongdeungpo-gu Seoul 07336 (KR)
(72) Inventor: LEE, Eunjung, Seoul 06772 (KR); JEONG, Hyojeong, Seoul 06772 (KR); BAE, Kyungnam, Seoul 06772 (KR); SHIN, Byounghyun, Seoul 06772 (KR); KWON, Jeonghwan, Seoul 06772 (KR)
(74) Representative: Frenkel, Matthias Alexander
(86) International application number: PCT/KR2021/008645
(87) International publication number: WO 2023/282369

(57) **Abstract**

A display device mirroring a second screen transmitted from a source device comprises a communication unit, a display unit, and a controller configured to output external input source information of at least one of the source device or the display device when user input to change an external input source is received and to output an external input source screen corresponding to the user input of the external input source information.

## Description

### [Technical Field]

The present disclosure relates to a display device and system.

### [Background Art]

A display device has a function of receiving, processing, and displaying an image to be viewed by a user. For example, the display device receives a broadcast signal selected by a user among broadcast signals transmitted from a broadcast station, separates an image signal from the received signal, and re-displays the separated image signal on a display.

Recently, as broadcasting technology and network technology have developed and external devices that can be linked with display devices (e.g., broadcast stations, set-top boxes, DVD devices, other networks, etc.) have developed, the range of image data which may be output by the display devices are increasing. In other words, display devices have been developed to provide users with a variety of content as well as real-time broadcast.

As the spread of display devices becomes more common as described above, users are increasingly using multiple display devices.

In addition, various data may be transmitted and received between display devices through a wired or wireless communication network, and a mirroring function is provided for remote control or sharing between display devices.

Meanwhile, in a case of using a mirroring service, when a user controls a display device using a remote control device, etc., it may be unclear whether a command is for a source device or a sink device.

### [Invention]

### [Technical Problem]

An object of the present disclosure is to indicate that when using a mirroring service, a user selects a specific display device to be controlled and controls the specific display device.

An object of the present disclosure is to provide user convenience by displaying a user's intention in a UI when a command to switch an external input source is received during a mirroring service.

### [Technical Solution]

According to an embodiment of the present disclosure, a display device mirroring a second screen transmitted from a source device may comprise a communication unit, a display unit, and a controller configured to output external input source information of at least one of the source device or the display device when user input to change an external input source is received and to output an external input source screen corresponding to the user input of the external input source information.

In addition, the controller may output an external input source list window, in which external input source information provided by the source device and the display device are listed, when the user input to change the external input source is received.

In addition, the controller may output a device selection window indicating that a device selected based on the user input is a source device or a sink device in response to user input to select the display device to be controlled.

In addition, in a case where a screen of the source device is turned off, the controller may output external input source information of at least one of the source device or the display device when user input to change the external input source is received and output an external input source screen corresponding to the user input of the external input source information.

In addition, in a case where the source device and the display device mirror the same screen, the controller may output a notification window indicating that a channel of the source device is changed together when the user input to change the external input source is received.

In addition, the controller may request a user's content to change the external input source.

In addition, in a case where the source device and the display device mirror different screens, the controller may output a notification window indicating that environmental settings of the source device are able to be changed when the user input to change the external input source is received.

In addition, the controller may request a user's content to change the external input source.

In addition, in a case where a currently output external input source is provided from the source device, the controller may transmit a specific command to the source device when the specific command to control the source device is received from a user, receive a screen, on which an operation corresponding to the specific command is performed, from the source device, and output the screen, on which the operation corresponding to the specific command is performed, through the display unit.

In addition, in a case where a currently output external input source is provided from the display device,

the controller may perform an operation corresponding to a specific command when the specific command is received from a user and output a screen on which the operation corresponding to the specific command is performed.

A method of operating a display device mirroring a second screen transmitted from a source device may comprise receiving user input to change an external input source, outputting external input source information of at least one of the source device or the display device and outputting an external input source screen corresponding to the user input of the external input source information.

The outputting the external input source information of at least one of the source device or the display device may further comprise outputting an external input source list window, in which external input source information provided by the source device and the display device are listed.

In addition, the outputting the external input source information of at least one of the source device or the display device may comprise outputting a device selection window indicating that a device selected based on the user input is a source device or a sink device based on user input in response to the user input to select the display device to be controlled.

In addition, the method may comprise, in a case where the source device and the display device mirror the same screen, outputting at least one of a notification window indicating that a channel of the source device or a notification window requesting a user's content to change the external input source.

In addition, the method may further comprise, in a case where the source device and the display device mirror different screens, outputting at least one of a notification window indicating that environmental settings of the source device are able to be changed or a notification window requesting a user's content to change the external input source.

### [Effect of the Invention]

According to an embodiment of the present disclosure, a user can easily recognize whether a currently controlled device is a source device or a sink device by selecting a specific display device to be controlled.

According to an embodiment of the present disclosure, a display device can easily let a user recognize a device being controlled by indicating that control of a specific display device is being performed.

According to an embodiment of the present disclosure, when a command to change an external input source is received during a mirroring service, an external input source suitable for a user's intention can be provided by determining the user's intention whether it is related to a source device or a sink device.

### [Description of Drawings]

FIG. 1 is a block diagram illustrating a configuration of a display device according to an embodiment of the present disclosure.
FIG. 2 is a block diagram illustrating a remote control device according to an embodiment of the present disclosure.
FIG. 3 is a diagram illustrating an actual configuration of a remote control device according to an embodiment of the present disclosure.
FIG. 4 shows an example of using a remote control device according to an embodiment of the present disclosure.
FIG. 5 is a flowchart illustrating an embodiment of the present disclosure.
FIG. 6 shows a screen of a display device according to the embodiment of the present disclosure.
FIG. 7 shows a system according to an embodiment of the present disclosure.
FIG. 8 is a flowchart according to an embodiment of the present disclosure.
FIG. 9 shows a mirroring process according to an embodiment of the present disclosure.
FIG. 10 shows a mirroring process according to an embodiment of the present disclosure.
FIG. 11 shows a mirroring process according to an embodiment of the present disclosure.
FIG. 12 is a flowchart according to an embodiment of the present disclosure.

### [Best Mode]

Hereinafter, embodiments relating to the present disclosure will be described in detail with reference to the accompanying drawings. The suffixes "module" and "-er/or" for components used in the description below are assigned or mixed in consideration of easiness in writing the specification and do not have distinctive meanings or roles by themselves.

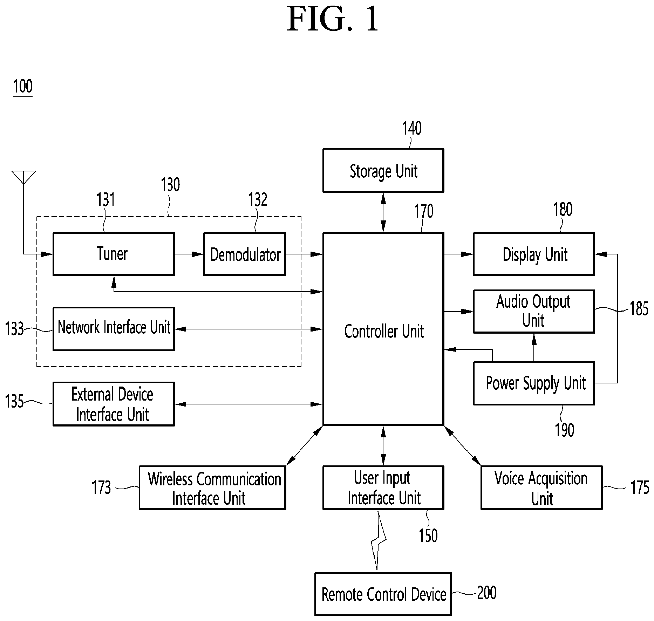

Fig. 1 is a block diagram illustrating a configuration of a display device according to an embodiment of the present disclosure.

Referring to FIG. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100. Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The voice acquisition unit 175 may acquire audio. The voice acquisition unit 175 may include at least one microphone (not shown) and may acquire audio around the display device 100 through the microphone (not shown).

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

The audio output unit 185 receives the audio-processed signal from the control unit 170 to output an audio signal.

The power supply unit 190 supplies the corresponding power to the entire display device 100. Particularly, power may be supplied to the control unit 170 that is capable of being implemented in the form of a system on chip (SOC), the display unit 180 for displaying an image, the audio output unit 185 for outputting audio, and the like.

Specifically, the power supply unit 190 may include a converter that converts AC power to DC power and a DC/DC converter that converts a level of the DC power.

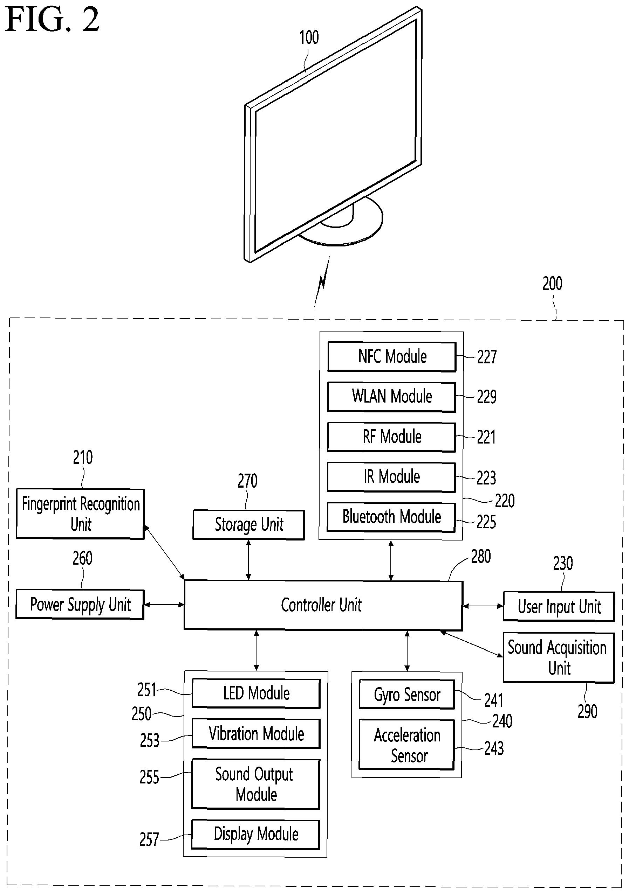

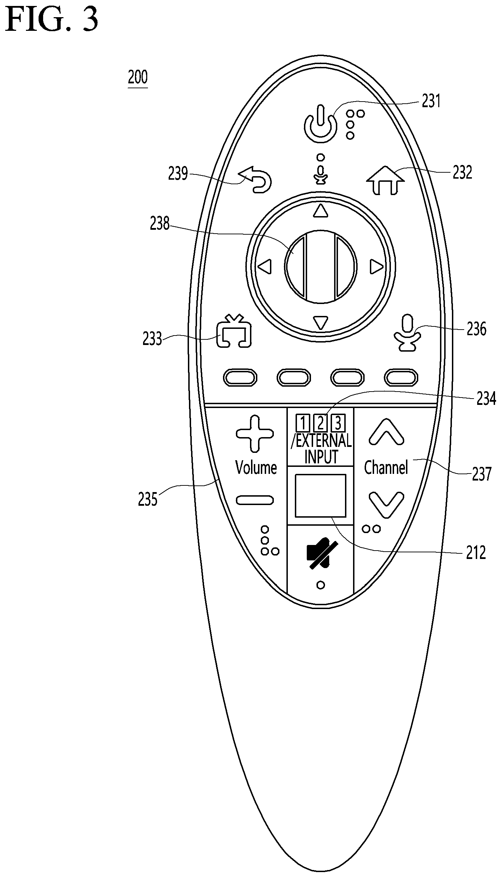

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced. The power supply unit 260 may resume the supply of power if a predetermined key provided at the remote control device 200 is operated.

The storage unit 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may include at least one microphone and acquire voice through the microphone.

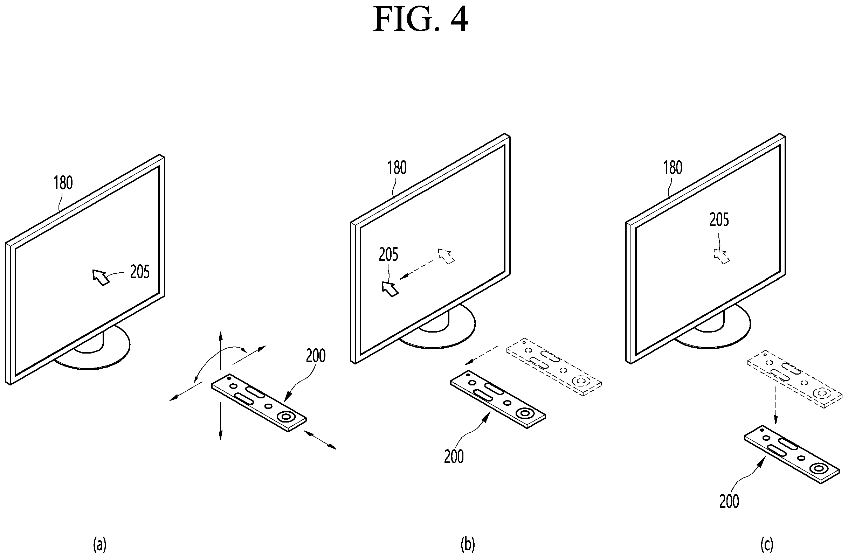

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

Meanwhile, according to the embodiment of the present disclosure, the performance of a display device is now showing a significant improvement comparable to that of a PC, and technology allowing an image viewed on a mobile device to be viewed on a large screen TV (television) or monitor are being researched.

Such wireless display transmission technology may be largely divided into content transmission and mirroring (screen casting).

Content transmission shall be linked to a VOD (Video on Demand) service rather than simply transmitting a mobile device screen. Content transmission is a method of sending a video as a signal, and mirroring is a method of transmitting content files to a remote device in a streaming manner and displaying them again on a large screen display such as a TV.

Mirroring (screen casting), as the name suggests, is a method of simultaneously displaying images output on a mobile device as if reflected in a mirror. Mirroring (screen casting) is similar to a method of projecting a computer screen onto a projector by connection of a wired method such as D-sub (D-Subminiature, RGB), DVI (Digital Visual Interface), or HDMI (High-Definition Multimedia Interface) when giving a presentation.

The mirroring method has an advantage of wirelessly transmitting pixel information of an original screen in real time without being dependent on a specific service.

WiFi Miracast is being studied as a wireless display transmission technology using WiFi. Miracast is a wireless video transmission standard and wireless display transmission technology created by the WiFi alliance. Miracast is a type of mirroring (screen casting) technology that compresses a screen and sound, sends it to a wireless LAN, and decompresses it to a dongle or integrated receiver and displays it on the screen.

With reference to the background technology, the embodiment of the present disclosure is described assuming that a first display device 100 and a second display device 300 are mirrored, but the embodiment of the present disclosure is not limited to the two display devices.

In addition, the first display device 100 and the second display device 300 may be TVs, and may also be interpreted as various electronic devices having a display unit.

The first display device 100 according to the embodiment of the present disclosure is a source device and may receive image data from an external input source (content provider) and transmit the received image data to the second display device 300.

At this time, the second display device 300 is a sink device and may output image data transmitted from the first display device 100.

Meanwhile, the second display device 300 is a sink device, but may also be possible to be directly connected to a separate external input source.

In addition, the first display device 100 and the second display device 300 shall be interpreted as including all of the components shown in FIG. 1.

Hereinafter, for convenience, the component of the first display device 100 is indicated by adding '-1' to the component of FIG. 1, and the component of the second display device 300 is indicated by adding '-2' to the component of FIG. 1.

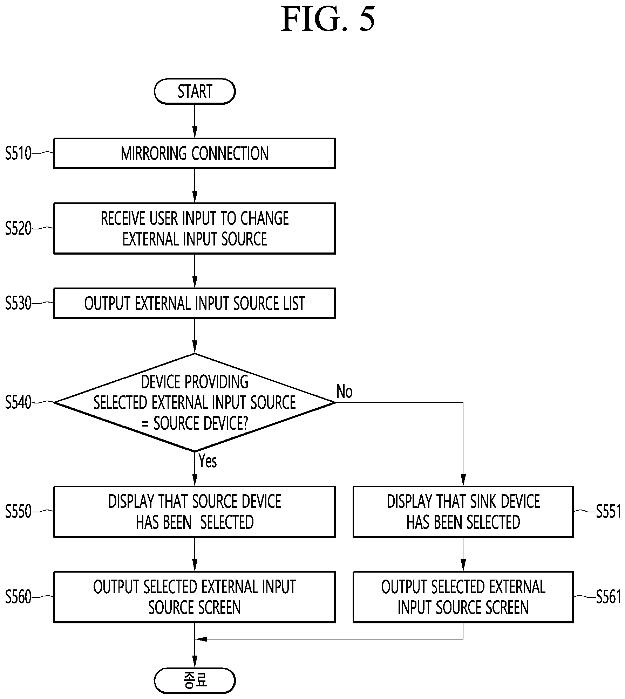

**FIG. 5** **is a flowchart illustrating an embodiment of the present disclosure.**

According to an embodiment of the present disclosure, the first display device 100 and the second display device 300 may be mirroring-connected (S510). At this time, as described above, 'mirroring connection' refers to a method of simultaneously displaying an image output on the first display device 100 on the second display device 300 as if reflected in a mirror, and may use WiFi Miracast as wireless display transmission technology.

In the embodiment of the present disclosure, the first display device 100 is described as a source device that provides a mirrored image, and the second display device 300 is described as a sink device that outputs the received mirrored image.

According to the embodiment of the present disclosure, the first display device 100 may receive image data from an external input source.

At this time, the external input source is an external input terminal and may mean the network interface unit 133 or the external device interface unit 135 of FIG. 1.

External devices may be provided in wired/wireless manners such as D-sub (D-Subminiature, RGB), DVI (Digital Visual Interface), HDMI (High-Definition Multimedia Interface), and live broadcasting, and the external input source may include various content providers such as set-top boxes, DVDs, broadcast stations, etc.

The second display device 300 is a sink device and may output image data received from the first display device 100.

At this time, the second display device 300 may output the same screen as the source device or a different screen from the source device depending on the hardware configuration of the source device.

For example, when the source device includes a plurality of decoders and a plurality of tuners, the second display device may output the same screen as the source device or a different screen from the source device. This will be explained later.

The second display device (hereinafter used interchangeably with a sink device) according to the embodiment of the present disclosure may receive user input to change the external input source (S520).

At this time, the user input may be transmitted by the remote control device 200 and received through various methods such as touch and button input through the user input interface unit 150-2.

The controller 170-2 of the second display device 300 according to the embodiment of the present disclosure may output an external input source list to the display unit in response to user input to change the external input source (S530).

Specifically, the external input source list may include at least one of a first external input source list provided from the source device through mirroring or a second external input source list directly connected to the second display device 300.

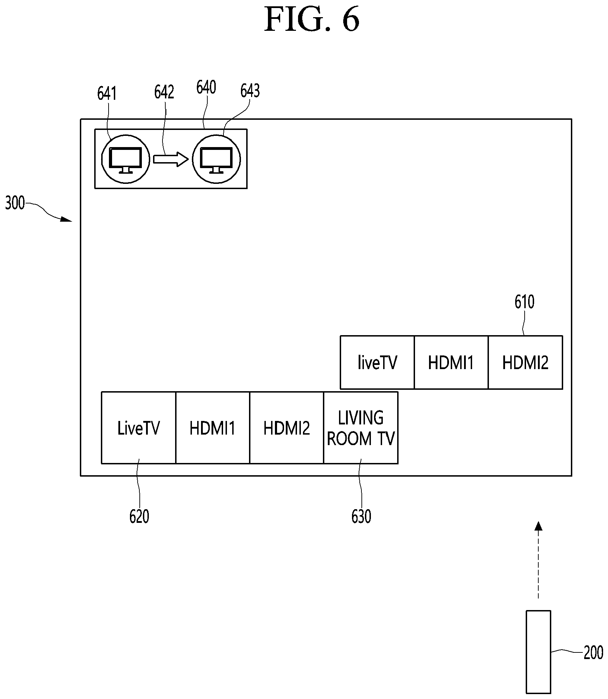

For example, the first external input source list and the second external input source list may be output at different locations on the display unit 180-2, and specific examples related to this will be described with reference to FIG. 6.

**FIG. 6** **shows a screen of the second display device 300 according to the embodiment of the present disclosure.**

Referring to FIG. 6, the controller 170-2 of the second display device 300, which is a sink device, may output external input source list windows 610 and 620 through the display unit 180-2.

For example, when a user sends to the second display device 300 a request corresponding to input to change the external input source using the remote control device 200, the second display device 300 may output the external input source list windows 610 and 620 in response to an external input source change command transmitted from the remote control device 200.

At this time, the external input source list windows 610 and 620 may refer to windows in which an external input source list directly connected to each of the source device and the sink device is listed.

That is, the controller 170-2 may output external input source list information provided by the source device and the second display device using the source list windows 610 and 620.

That is, the controller 170-2 of the second display device 300 may output the external input source list windows 610 and 620 of at least one of the source device or the second display device 300 and output external input source information included in the source list window.

For example, the external input source information may consist of an external input source list, and may include an external input source list 610 directly connected to the second display device 300, and an external input source list 620 provided by the source device 100 and an external input source 630 which is currently being viewed.

At this time, the controller 170-2 may also be able to highlight and output the external input source 630 that the user is currently watching in the external input source list.

The user may input a command to select one of the other external input source list from the external input source list 630 being currently viewed from among the output external input source lists.

Specifically, the user may select one of the external input sources included in the external input source list 620 of the source device.

Alternatively, the user may select one of the external input sources included in the external input source list 610 of the sink device.

Through the input, the external input source output through the second display device 300 may be changed.

FIG. 5 will be described again.

The controller 170-2 of the second display device 300 according to the embodiment of the present disclosure may detect whether a device providing the selected external input source is a source device (S540).

As described in the object of this disclosure, when a user selects an external input source to watch, there may be confusion as to whether the external input source is provided by the source device or the external input source is directly connected to the sink device.

To prevent this, the controller 170-2 of the second display device 300 according to the embodiment of the present disclosure may output a device selection window 640 (see FIG. 6) indicating whether a device selected based on user input is a source device or a sink device in response to the user input to select the display device to be controlled.

When the device providing the selected external input source is a source device (S540-YES), the controller 170-2 according to the embodiment of the present disclosure may output that the source device has been selected (S550).

Alternatively, if the device providing the selected external input source is a sink device (S540-NO), the controller 170-2 may output that the sink device has been selected (S551).

Hereinafter, the device selection window 640 will be described with reference to FIG. 6.

Referring to FIG. 6, in a specific area of the display unit 180-2 of the second display device 300, the device selection window 640 indicating that the device providing an external input source selected based on user input is the source device 100 or the sink device 300 may be output.

At this time, the device selection window 640 may include icons 641 and 643 representing the source device and sink device, respectively, and a guide icon 642 indicating that the currently selected external input source among the source device and sink device has changed.

Meanwhile, the guide icon 642 may also be displayed in the shape of an arrow indicating that the display device providing the external input source is changed.

For example, a case where the user inputs a command to change the external input source through the remote control device 200 to display the external input source list windows 610 and 620 will be described.

The user may input an additional command using the remote control device to change the external input source.

At this time, the user's additional command may be a command to change the external input source 630 currently being output to another external input source.

The controller 170-2 of the second display device 300 according to the embodiment of the present disclosure may activate the device selection window 640.

Since the second display device outputs the external input source of the source device through mirroring in the device selection window 640, the source device icon 641 may be activated.

First, when the user selects an external input source to be changed in the first external input source list window connected to the source device, the controller of the second display device may keep the source device icon 641 included in the device selection window 640 activated.

Second, when the user selects an external input source to be changed in the second external input source list window 610 of the second display device, which is a sink device, the controller 170-2 of the second display device 300 may activate the sink device icon 643 included in the device selection window 640.

In addition, the guide icon 642 may be activated to indicate that the currently selected external input source is connected to the sink device rather than the source device.

FIG. 5 will be described again.

The controller of the second display device according to the embodiment of the present disclosure may output information about the selected external input source according to a change in the external input source and then output the selected external input source screen (S560, S561).

Hereinafter, unlike mirroring in which the source device and the sink device output the same screen, a case where the source device and the sink device output different screens will be described.

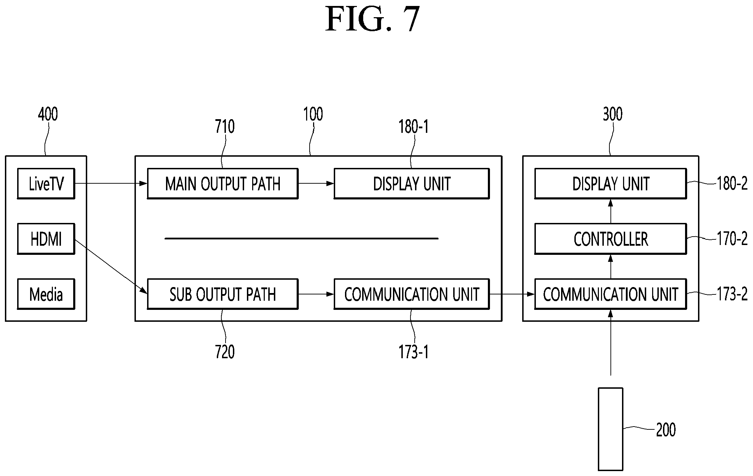

**FIG. 7** **shows a system according to an embodiment of the present disclosure.**

The source device according to the embodiment of the present disclosure may provide image data to output different images to the source device and the sink device using a main output path and a sub output path.

As described above, the first display device 100, which is a source device, may be equipped with a plurality of decoders and a plurality of tuners to allocate different image data to the main output path and the sub output path.

Meanwhile, the types of external devices 400 will be described as examples of real-time broadcast, HDMI, and other media devices.

Referring to FIG. 7, the first display device 100, which is a source device, may allocate first image data to the main output path 710 and output the image data allocated to the main output path through the display unit 180-1.

In addition, the first display device 100 may generate a sub output path 720 to transmit second image data to the second display device 300, which is a sink device.

The source device may allocate the second image data to the sub output path 720 and transmit the second image data to the second display device 300 through the communication unit 173-10.

The second display device 300 may output the second image data received from the source device through the display unit 180-2.

Specifically, specific content may mean first content and second content that is different from the first content.

Specifically, the main output path 710 and the sub output path 720 may mean a route through which content data received from an external device is processed to be output through the display unit.

For example, assume that the first content is 'real-time broadcast on a first channel' provided by a broadcast station, and the second content is 'real-time broadcast on a second channel' provided by the broadcast station.

At this time, the first display device 100 may include a first tuner, a second tuner, a first demodulator, and a second demodulator.

The first display device 100 may receive a broadcast signal for the selected first content using the first tuner and the first demodulator. The first demodulator may separate the received broadcast signal into a video signal, an audio signal, and a data signal related to the broadcast program, and restore the separated video signal, audio signal, and data signal to a form capable of being output.

At this time, the main output path 710 may mean a route through which the first content is processed, including the first tuner and the first demodulator.

In addition, the first display device 10 may receive a broadcast signal for the selected second content using the second tuner and the second demodulator. The second demodulator may separate the received broadcast signal into a video signal, an audio signal, and a data signal related to the broadcast program.

At this time, the sub output path 720 may mean a route through which the second content is processed, including the second tuner and the second demodulator.

The controller 170-1 of the first display device 100 may transmit video signals, audio signals, and data signals allocated to the sub path to the second display device 300 through the communication unit.

The second display device 300 may output the received second content through the display unit 180-2.

Through the above process, the first display device 100 outputs the first content and simultaneously transmits the second content allocated to the sub path to the second display device 300, thereby supporting the second display device 300 to output second content.

Accordingly, the second display device 300 may output the second content.

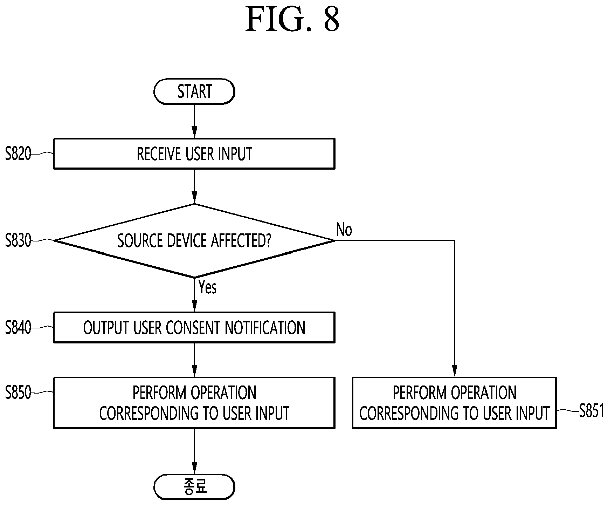

Hereinafter, in FIG. 8, a case where a change in the external input source in the sink device affects the source device will be described.

**FIG. 8** **is a flowchart according to an embodiment of the present disclosure.**

Referring to FIG. 8, the second display device 300 may receive user input to change the external input source while performing mirroring with the source device (S820).

At this time, when the external input source is changed in response to user input, the source device may be affected depending on what screen the source device and sink device output.

The controller 170-1 of the second display device 300 may determine whether the change in external input source affects the source device (S830).

Specifically, the case where the change in external input source affects the source device may include a case where the same image is mirrored on the source device 100 and the sink device 300 and output through the respective display units 180-1 and 180-2.

In addition, there may be a case where different images are mirrored in the source device 100 and the sink device 300 and output through the respective display units 180-1 and 180-2.

A case where the change in external input source does not affect the source device may be a case where the display unit of the source device is turned off and a specific image is mirrored on the sink device.

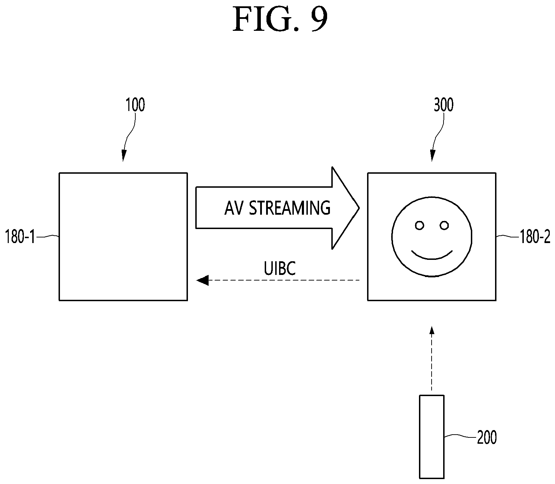

Hereinafter, each case will be described with reference to FIGS. 9 to 11.

**FIG. 9** **shows a mirroring process according to an embodiment of the present disclosure.**

Referring to FIG. 9, the first display device 100, which is a source device, may be turned on, but the display unit 180-2 may be turned off. In other words, the source device may be in ACTIVE-STANBY state.

In this case, since the display screen of the first display device 100, which is the source device, is in an off state, even if specific input (including external input source change or channel change, etc.) is input to the sink device, the settings of the source device are not changed.

Therefore, this case may be a case where the source device is not affected (S830-NO).

Specifically, ACTIVE-STANBY may mean that the display unit 180-1 of the first display device 100 is controlled to be off and all other components are activated.

The second display device 300, which is a sink device, may be mirrored with the first display device to output specific image data through the display unit 180-2.

The user may input necessary user input, such as external input source change or channel change input, using the remote control device.

The controller of the second display device may transmit the corresponding command to the source device using a UIBC (User Input Back Channel) and output a screen on which the command corresponding to the user input has been executed.

That is, referring to FIG. 8, even if user input is received, since the source device is not affected, the controller 180-2 of the second display device 300 may output a screen on which an operation corresponding to the user input is performed. (S851).

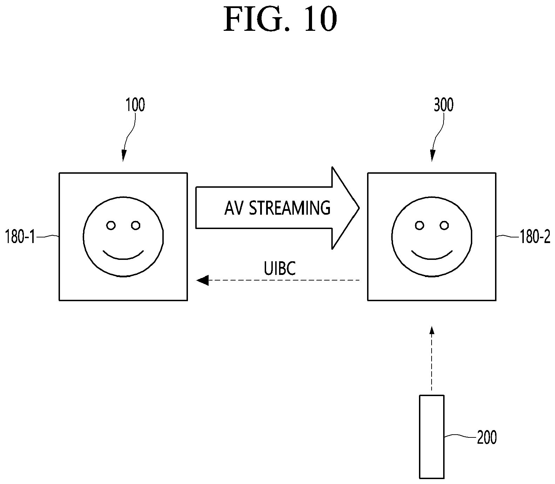

**FIG. 10** **shows a mirroring process according to an embodiment of the present disclosure.**

Referring to FIG. 10, the first display device 100, which is a source device, may be performing mirroring to output the same screen as the second display device 300, which is a sink device.

In this case, since the screen of the display unit 180-1 of the first display device 100, which is a source device, outputs the same screen as the second display device 300, which is a sink device, when specific input (including external input source change, channel change, etc.) is input to the sink device, the same change may be performed on the source device.

Accordingly, this case may be a case where the source device is affected (S830-YES).

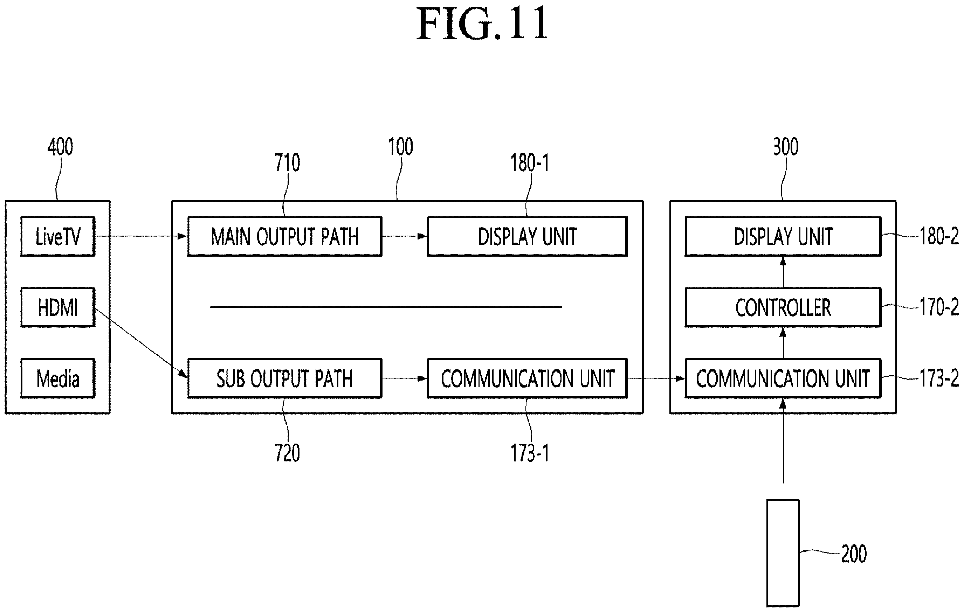

Another embodiment will be described with reference to FIG. 11.

**FIG. 11** **shows a mirroring process according to an embodiment of the present disclosure.**

Referring to FIG. 11, the first display device 100, which is a source device, may be performing mirroring to output different screens from the second display device 300, which is a sink device.

In this case, the source device is equipped with a plurality of decoders, outputs the first image data received from at least one external input source through the first decoder corresponding to the main output path, and transmits the second image data to the sink device through the second decoder corresponding to the sub output path.

The sink device may receive the second image data and output the second image data.

In this case, when specific input (including external input source change or channel change, etc.) is input to the second display device 300, which is a sink device, the first image data output by the source device may be output without change.

Meanwhile, according to the embodiment of the present disclosure, when the external input source or detailed settings output from the second display device are changed, the detailed settings of the source device that shall transmit image data according to UIBC may also need to be changed.

Accordingly, this case may be a case where the source device is affected (S830-YES).

FIG. 8 will be described again.

First, as shown in FIG. 10, in a case where the source device and the second display device output the same screen, when user input to change the external input source is received, the second display device 300 according to the embodiment of the present disclosure may display a notification window indicating that the channel is changed together.

Specifically, the controller 180-2 may request the user's consent to change the external input source (S840).

Likewise, as shown in FIG. 11, in the second display device according to the embodiment of the present disclosure, in a case where the source device and the second display device output different screens, the controller may output a notification window indicating that the environment settings of the source device are able to be changed when receiving user input to change the external input source.

In addition, the controller may request user consent to change the external input source (S850).

At this time, the guide notification window and the consent request notification window may be output in the form of a pop-up through the display unit 180-2 of the second display device 300.

After recognizing the contents of the notification windows, the user may input a request to continue performing an operation affecting the source device through user input.

The second display device 300 may execute the command according to the user's consent and perform the settings of the first display device 100 or the external input source change.

Meanwhile, after the external input source list in FIG. 5 is output through the display unit of the sink device (S530), when the user selects one of the external input sources included in the external input source list window 620 of the source device, or the user selects one of the external input sources included in the external input source list window 610 of the sink device (S540), outputting whether the provider of the external input source selected by the user is a source device or a sink device through the display unit (S550 to S560, S551 to S561) was described in the embodiment of FIG. 5 above.

According to an embodiment of the present disclosure, in addition to outputting through the display unit whether the provider of the external input source selected by the user is a source device or a sink device, a case where an operation corresponding to a specific command is performed in the external input source provider when the specific command is input to the provider (the source device or the sink device) of the external input source is input through the sink device may also be included.

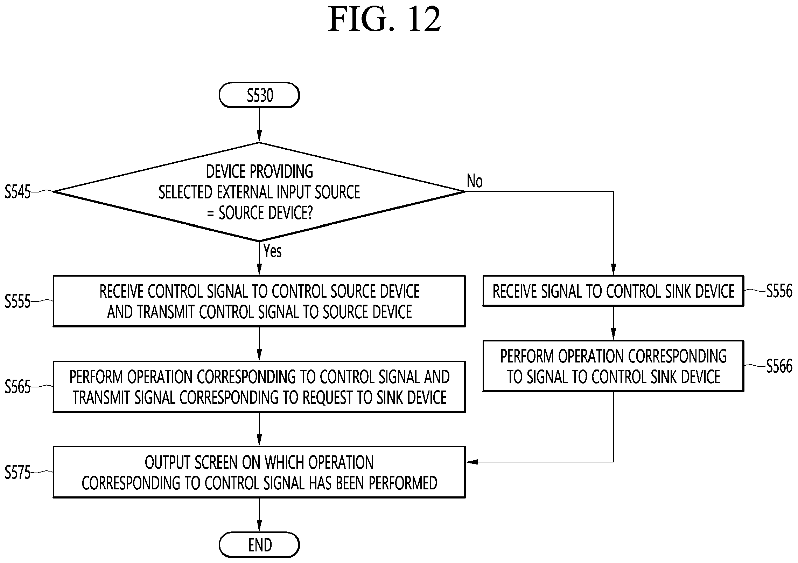

A specific embodiment will be described with reference to FIG. 12.

According to an embodiment of the present disclosure, the external input source list windows 610 and 620 are output through the display unit 180-2 of the sink device (S530), and the user may input a command to select one of the other external input source list from the external input source list 630 which is currently viewed among the output external input source lists (S545).

When the device providing the selected external input source is a source device (S545-YES), the controller 170-2 of the sink device according to the embodiment of the present disclosure may allow the user to control the source device using the sink device.

Therefore, when the user inputs a signal to control the source device, the sink device may receive a control signal to control the source device, and transmit the control signal to control the source device to the source device through the sink device (S555).

At this time, the control signal may be a control code that controls a specific operation to be performed in the source device.

The source device may perform an operation corresponding to the control signal received from the sink device. Afterwards, the source device may transmit a signal corresponding to the control signal to the sink device (S565).

At this time, the transmission method may include UBIC (User Back Input Channel), and various methods through which a plurality of display devices communicate with each other may be used.

The sink device according to the embodiment of the present disclosure may output a screen on which a specific operation has been performed from the source device (S575).

Meanwhile, when the device providing the selected external input source is a sink device (S545-NO), the controller 170-2 of the sink device according to the embodiment of the present disclosure may recognize the specific command input of the user as a signal to control the sink device without change.

Therefore, when the user inputs a control signal for a specific command, the sink device may receive a signal corresponding to the specific command (S556) and perform an operation corresponding to the specific command (S566).

Afterwards, the sink device will be able to output a screen on which a specific operation has been performed (S575).

Meanwhile, the specific command preferably includes commands that control the overall operation of the display device, such as volume control, channel change and environmental setting change of the display device.

In addition, the embodiment of FIG. 12 is implemented with the embodiment of FIG. 5, so that the device providing the external input source is visually represented and at the same time the specific command is input to control the device providing the external input source.

Meanwhile, the above-described embodiments may be implemented by a method of operating a display device.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical spirit of the present disclosure but to illustrate the technical idea of the present disclosure, and the technical spirit of the present disclosure is not limited by these embodiments.

The scope of protection of the present disclosure should be interpreted by the appending claims, and all technical ideas within the scope of equivalents should be construed as falling within the scope of the present disclosure.

## Claims

1. A display device mirroring a second screen transmitted from a source device, the display device comprising:
a communication unit;
a display unit; and
a controller configured to output external input source information of at least one of the source device or the display device when user input to change an external input source is received and to output an external input source screen corresponding to the user input of the external input source information.

2. The display device of claim 1, wherein the controller outputs an external input source list window, in which external input source information provided by the source device and the display device are listed, when the user input to change the external input source is received.

3. The display device of claim 1, wherein the controller outputs a device selection window indicating that a device selected based on the user input is a source device or a sink device in response to user input to select the display device to be controlled.

4. The display device of claim 1, wherein, in a case where a screen of the source device is turned off, the controller outputs external input source information of at least one of the source device or the display device when user input to change the external input source is received and outputs an external input source screen corresponding to the user input of the external input source information.

5. The display device of claim 1, wherein, in a case where the source device and the display device mirror the same screen, the controller outputs a notification window indicating that a channel of the source device is changed together when the user input to change the external input source is received.

6. The display device of claim 5, wherein the controller requests a user's content to change the external input source.

7. The display device of claim 1, wherein, in a case where the source device and the display device mirror different screens, the controller outputs a notification window indicating that environmental settings of the source device are able to be changed when the user input to change the external input source is received.

8. The display device of claim 7, wherein the controller requests a user's content to change the external input source.

9. The display device of claim 1, wherein, in a case where a currently output external input source is provided from the source device, the controller transmits a specific command to the source device when the specific command to control the source device is received from a user, receives a screen, on which an operation corresponding to the specific command is performed, from the source device, and outputs the screen, on which the operation corresponding to the specific command is performed, through the display unit.

10. The display device of claim 1, wherein, in a case where a currently output external input source is provided from the display device, the controller performs an operation corresponding to a specific command when the specific command is received from a user and outputs a screen on which the operation corresponding to the specific command is performed.

11. A method of operating a display device mirroring a second screen transmitted from a source device, the method comprising:
receiving user input to change an external input source;
outputting external input source information of at least one of the source device or the display device; and
outputting an external input source screen corresponding to the user input of the external input source information.

12. The method of claim 11, wherein the outputting the external input source information of at least one of the source device or the display device further comprises outputting an external input source list window, in which external input source information provided by the source device and the display device are listed.

13. The method of claim 11, wherein the outputting the external input source information of at least one of the source device or the display device comprises outputting a device selection window indicating that a device selected based on the user input is a source device or a sink device based on user input in response to the user input to select the display device to be controlled.

14. The method of claim 11, further comprising, in a case where the source device and the display device mirror the same screen, outputting at least one of a notification window indicating that a channel of the source device or a notification window requesting a user's content to change the external input source.

15. The method of claim 11, further comprising, in a case where the source device and the display device mirror different screens, outputting at least one of a notification window indicating that environmental settings of the source device are able to be changed or a notification window requesting a user's content to change the external input source.

16. The method of claim 11, further comprising:
in a case where a currently output external input source is provided from the source device,
transmitting a specific command to the source device when the specific command to control the source device is received from a user;
receiving a screen, on which an operation corresponding to the specific command is performed, from the source device; and
outputting the screen, on which the operation corresponding to the specific command is performed, through the display unit.

17. The method of claim 11, further comprising, in a case where a currently output external input source is provided from the display device, performing an operation corresponding to a specific command when the specific command is received from a user and outputting a screen, on which the operation corresponding to the specific command is performed.
